# EUROPEAN PATENT APPLICATION

(11) **EP 4 546 478 A1**
(43) Date of publication of application: **30.04.2025**
(21) Application number: 24191053.8
(22) Date of filing: 26.07.2024
(51) Int. Cl.: H01M 10/04

(54) **RECHARGEABLE BATTERY**

(30) Priority: 25.10.2023 KR 20230143995
(71) Applicant: SAMSUNG SDI CO., LTD., Giheung-gu Yongin-si, Gyeonggi-do 17084 (KR)
(72) Inventor: Shin, Donghyun, 17084 Yongin-si, Gyeonggi-do (KR)
(74) Representative: Gulde & Partner

(57) **Abstract**

A rechargeable battery includes an electrode assembly including a first wound part and a second wound part connected by a connection part, the electrode assembly being formed by being wound at each of both ends of a stacked body of a first electrode plate, a first separator, a second electrode plate, and a second separator; and a case that accommodates the electrode assembly, wherein the case includes flat sides facing each other at both sides of the case in a width direction, and curved sides at both ends of the case in a length direction, and the flat sides and the first wound part and the second wound part surround an electrolyte solution accommodating space therebetween.

## Description

### BACKGROUND

### 1. Field

Embodiments relate to a rechargeable battery.

### 2. Description of the Related Art

A rechargeable battery is a battery that is repeatedly charged and discharged, unlike a primary battery. A small rechargeable battery may be used for portable small electronic devices such as mobile phones, laptop computers, or camcorders. A large-capacity and high-density rechargeable battery may be used to store motor driving power or energy of hybrid vehicles and electric vehicles.

The rechargeable battery may include an electrode assembly for charging and discharging a current, a case for receiving the electrode assembly and an electrolyte solution, a cap plate connected to an opening of the case, and an electrode end for drawing the electrode assembly outside of the cap plate. The electrode assembly may be formed as a jelly roll type formed by winding an electrode plate and a separator, or as a stack type formed by stacking an electrode plate and a separator.

### SUMMARY

The embodiments may be realized by providing a rechargeable battery including an electrode assembly including a first wound part and a second wound part connected by a connection part, the electrode assembly being wound at each of both ends of a stacked body of a first electrode plate, a first separator, a second electrode plate, and a second separator; and a case that accommodates the electrode assembly, wherein the case includes flat sides facing each other at both sides of the case in a width direction, and curved sides at both ends of the case in a length direction, and the flat sides and the first wound part and the second wound part surround an electrolyte solution accommodating space therebetween.

The connection part may be a part of the stacked body of the first electrode plate, the first separator, the second electrode plate, and the second separator.

The first wound part and the second wound part may have a circular cylinder shape, and the curved sides of the case may include a first rounded side that faces a side of the first wound part and a second rounded side that faces a side of the second wound part.

The electrolyte solution accommodating space may be surrounded by a first side of the first wound part and a second side of the second wound part, each of the first wound part and the second wound part having a circular cylinder shape, and the flat sides facing the first side of the first wound part and the second side of the second wound part.

The first wound part and the second wound part may be wound in the same direction, and the electrolyte solution accommodating space may have a symmetrical structure between the flat sides of the case.

The first wound part and the second wound part may have a track-shaped pillar shape, and the curved sides of the case may include a 1-1 quarter circle side and a 1-2 quarter circle side that face two sides of the first wound part, and a 2-1 quarter circle side and a 2-2 quarter circle side that face two sides of the second wound part.

The electrolyte solution accommodating space may be surrounded by a first side of the first wound part and a second side of the second wound part, each of the first wound part and the second wound part having a track-shaped column shape, and the flat sides facing the first side of the first wound part and the second side of the second wound part.

The case may include a 1-1 flat side, a 1-2 flat side, a 2-1 flat side, and a 2-2 flat side, the first wound part and the second wound part may be wound in the same direction, and the electrolyte solution accommodating space may have a symmetrical structure between the 1-1 flat side and the 1-2 flat side.

The electrode assembly may further include a third wound part between the first wound part and the second wound part, the third wound part having a circular cylinder shape, the connection part may include a 3-1 connection part connecting the first wound part and the third wound part, and a 3-2 connection part connecting the third wound part and the second wound part, and the curved sides of the case may include a first rounded side that faces a side of the first wound part and a second rounded side that faces the side of the second wound part.

The electrolyte solution accommodating space may be surrounded by a first side of the first wound part, a third side of the third wound part, a fourth side of the third wound part, and a second side of the second wound part, each of the first wound part, the second wound part, and the third wound part having a circular cylinder shape, and the flat sides facing the first side of the first wound part, the third side of the third wound part, the fourth side of the third wound part, and the second side of the second wound part.

The first wound part and the second wound part may be wound in the opposite direction, and the third wound part may wind the stacked body in two layers and may be wound in the same direction as the first wound part.

The electrode assembly may further include a third wound part between the first wound part and the second wound part, the first wound part, the third wound part, and the second wound part may each have a track-shaped column shape, and the curved sides of the case may include a 1-1 quarter circle side and a 1-2 quarter circle side, which respectively face two sides of the first wound part, and a 2-1 quarter circle side and a 2-2 quarter circle side, which respectively face two sides of the second wound part.

The electrolyte solution accommodating space may be surrounded by a first side of the first wound part, a third side of the third wound part, a fourth side of the third wound part, and a second side of the second wound part, each of the first wound part, the second wound part, and the third wound part having a track-shaped column shape, and the flat sides facing the first side of the first wound part, the third side of the third wound part, the fourth side of the third wound part, and the second side of the second wound part.

The case may include a 1-1 flat side, a 1-2 flat side, a of 2-1 flat side, and a 2-2 flat side, the first wound part and the second wound part may be wound in the opposite direction, and the third wound part may wind the stacked body in two layers and may be wound in the same direction as the first wound part.

The rechargeable battery may further include a cap plate that closes and seals an opening of the case, and an electrode terminal connected to a second uncoated region of the second electrode plate and installed in an insulating structure on the cap plate, and wherein the case may be connected to a first uncoated region of the first electrode plate.

### BRIEF DESCRIPTION OF THE DRAWINGS

Features will be apparent to those of skill in the art by describing in detail exemplary embodiments with reference to the attached drawings in which:
FIG. 1 is a perspective view of a rechargeable battery according to a first embodiment of the present disclosure.
FIG. 2 is a cross-sectional view taken along a line II-II in FIG. 1.
FIG. 3 is an exploded perspective view of a stacked body including a first separator, a first electrode plate, a second separator, and a second electrode plate forming an electrode assembly.
FIG. 4 is a side view showing a winding direction on a stacked body in FIG. 3.
FIG. 5 is a side view of an electrode assembly wound in a winding direction of FIG. 4.
FIG. 6 is a cross-sectional view of a state in which an electrode assembly of FIG. 5 is in a case.
FIG. 7 is a cross-sectional view of a state in which an electrode assembly is in a case in a rechargeable battery according to a second embodiment of the present disclosure.
FIG. 8 is a side view showing a winding direction on a stacked body forming an electrode assembly of a rechargeable battery according to a third embodiment of the present disclosure.
FIG. 9 is a cross-sectional view of a state in which an electrode assembly of FIG. 8 is in a case.
FIG. 10 is a cross-sectional view of a state in which an electrode assembly is in a case in a rechargeable battery according to a fourth embodiment of the present disclosure.

### DETAILED DESCRIPTION

In the drawing figures, the dimensions of layers and regions may be exaggerated for clarity of illustration. It will also be understood that when a layer or element is referred to as being "on" another layer or element, it can be directly on the other layer or element, or intervening layers may also be present. In addition, it will also be understood that when a layer is referred to as being "between" two layers, it can be the only layer between the two layers, or one or more intervening layers may also be present.

Hereinafter, the present disclosure will be described more fully with reference to the accompanying drawings, in which embodiments of the disclosure are shown. As those skilled in the art would realize, the described embodiments may be modified in various different ways, all without departing from the scope of the present disclosure. The drawings and description are to be regarded as illustrative in nature and not restrictive. Like reference numerals designate like elements throughout the specification.

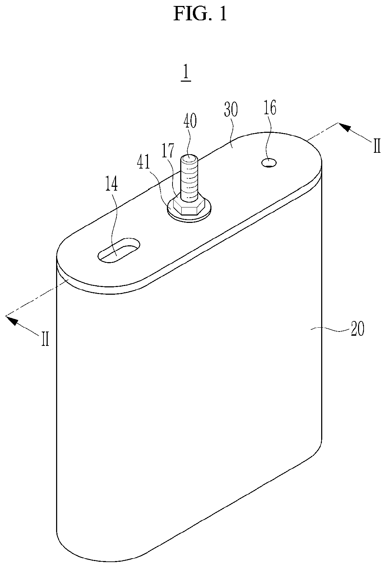

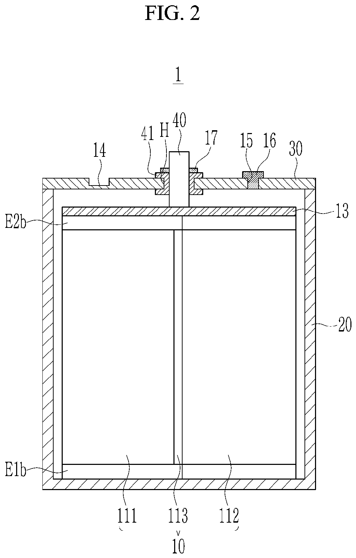

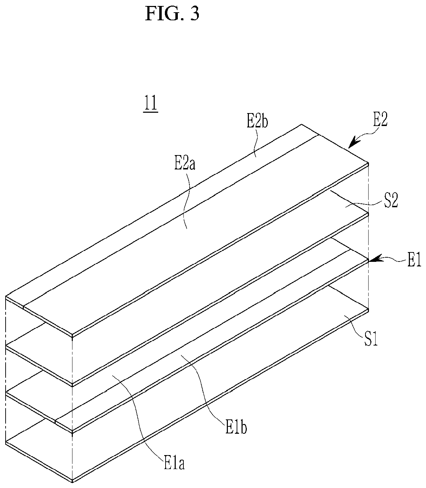

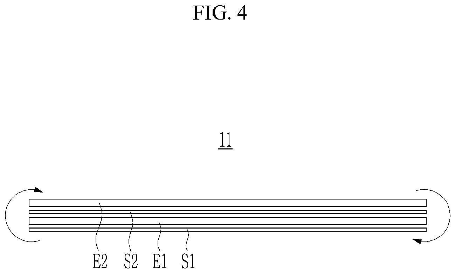

FIG. 1 is a perspective view of a rechargeable battery according to a first embodiment of the present disclosure. FIG. 2 is a cross-sectional view taken along a line II-II in FIG. 1. FIG. 3 is an exploded perspective view of a stacked body including a first separator, a first electrode plate, a second separator, and a second electrode plate forming an electrode assembly. FIG. 4 is a side view showing a winding direction on a stacked body in FIG. 3.

Referring to FIG. 1 to FIG. 4, a rechargeable battery 1 of a first embodiment may include an electrode assembly 10 that performs a charge and a discharge, a case 20 accommodating the electrode assembly 10 and an electrolyte solution, a cap plate 30 that closes and seals the opening of the case 20, and an electrode terminal 40 installed with an insulating structure on the cap plate 30.

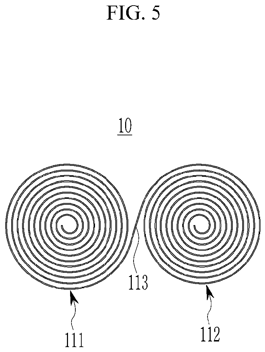

FIG. 5 is a side view of an electrode assembly wound in a winding direction of FIG. 4. Referring to FIG. 1 to FIG. 5, the electrode assembly 10 may include a first wound part 111 and a second wound part 112 formed by being wound, for example spirally wound, in the same (e.g., clockwise) direction at both ends of the stacked body 11.

In an implementation, the first wound part 111 may be wound in an upward clockwise direction, and the second wound part 112 may be wound in a downward clockwise direction. The first wound part 111 and the second wound part 112 may be formed by winding the stacked body 11 by a winding mandrel, and both winding mandrels may move toward each other to narrow the gap between them while performing the winding.

The first wound part 111 and the second wound part 112 may each be formed in a jelly roll state, and may be connected to each other through the connection part 113 to electrically form one electrode assembly 10. The connection part 113 may be inclined inside the case 20, for example inclined with respect to the flat sides 21 and 22, respectively.

The stacked body 11 may be formed by stacking a first separator S1, a first electrode plate E1, a second separator S2, and a second electrode plate E2, and refers to the state before winding with the electrode assembly 10. The first electrode plate E1 and the second electrode plate E2 may include coated regions E1a and E2a (in which an active material is coated on both sides of a substrate that is formed of a thin metal plate) and uncoated regions E1b and E2b (in which the substrate is exposed without being coated with the active material).

In an implementation, the first electrode plate E1 may be a positive electrode formed by coating a positive active material on the substrate made of an aluminum (Al) foil, and the second electrode plate E2 may be a negative electrode formed by coating a negative active material on the substrate made of a copper (Cu) foil.

The uncoated regions E1b and E2b of the first and second electrode plates E1 and E2 may be at both winding axial ends (upper and lower ends in FIG. 1 and FIG. 2) of the electrode assembly 10, respectively. For example, the uncoated region E1b of the first electrode plate E1 may be at a first winding axial end, and the uncoated region E2b of the second electrode plate E2 may be at a second winding axial end opposite the first winding axial end. The uncoated region E1b of the first electrode plate E1 may be welded to the bottom of case 20. In an implementation, the case 20 may accommodate the electrode assembly 10 and the electrolyte solution and may be connected to the first uncoated region E1b of the first electrode plate E1. In an implementation, the uncoated region E1b of the first electrode plate E1 may be welded to the current collecting plate, and the current collecting plate may be welded directly to the bottom of the case.

The uncoated region E2b of the second electrode plate E2 may be welded to the current collecting plate 13, and the current collecting plate 13 may be welded to the electrode terminal 40. The electrode terminal 40 may be in a terminal hole H of the cap plate 30 with the gasket 41 therebetween. In an implementation, the electrode terminal 40 may be a bolt, and may be fastened with a nut 17 and fixed to the cap plate 30. In an implementation, the electrode terminal may be formed as a rivet type.

In an implementation, the first and second electrode plates may not have an uncoated region at one end of the first and second electrode plates in the width direction, and an uncoated region may be on at least one end of both ends of the first and second electrode plates and the connection part 113 in the length direction, respectively, and a tab may be welded to the uncoated regions to be formed.

The cap plate 30 may include a vent plate 14 and an electrolyte injection opening 15. The vent plate 14 may help prevent explosion of the rechargeable battery 1 by discharging an internal pressure if the internal pressure of the rechargeable battery were to increase and an event were to occur. The electrolyte injection opening 15 may be sealed with a stopper 16 after the electrolyte solution is injected.

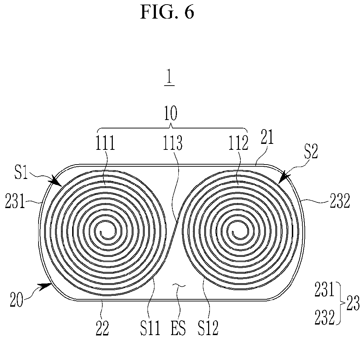

FIG. 6 is a cross-sectional view showing a state in which an electrode assembly in FIG. 5 is in a case. Referring to FIG. 5 and FIG. 6, the case 20 may include a pair of flat surfaces or flat sides 21 and 22 facing each other on (e.g., both) sides of the cap plate 30 in a widthwise direction (i.e., the same as the widthwise direction of the case 20), and a curved surface or curved side (e.g., pair of curved sides) 23 at (e.g., both) ends of the cap plate 30 in the lengthwise direction (i.e., the same as the lengthwise direction of the case 20). The case 20 including the flat sides 21 and 22 may establish or include an electrolyte solution accommodating space ES between the first wound part 111 and the second wound part 112. The shape of case 20 may be adapted in some areas, e.g, at edges of the case, to the shape of the electrode assembly 10. In this way, the injection and/or amount of electrolyte accommodated in the case 20 may be increased.

The pair of curved sides 23 may help reduce the entire space or volume of the case 20 that accommodates the electrode assembly 10. The pair of flat sides 21 and 22 may help secure or define the electrolyte solution accommodating space ES with the first and second wound parts 111 and 112 therebetween, thereby increasing the amount of the electrolyte solution that may be accommodated in the case 20, even though the entire volume of the case 20 may be reduced.

The connection part 113 may be formed by the stacked body 11 of the first electrode plate E1, the first separator S1, the second electrode plate E2, and the second separator S2. In an implementation, the tab may be connected to the connection part 113 by welding.

In an implementation, the first wound part 111 and the second wound part 112 may be formed as, e.g., circular cylinders. The curved sides 23 of the case 20 may include a first half circle side or first rounded side 231 that accommodates or faces the (e.g., rounded) side of the first wound part 111 and a second half circle side or second rounded side 232 that accommodates or faces the (e.g., rounded) side of the second wound part 112. In an implementation, the curved sides 23 of the case 20 may have a (e.g., concave) rounded shape that is roughly complementary to the (e.g., convex) rounded shape of the first wound part 111 and the second wound part 112.

The electrolyte solution accommodating space ES may be set or surrounded by or between the first side S11 of the first wound part 111 and the second side S12 of the second wound part 112, which may be formed by a circular cylinder, and the space between the flat sides 21 and 22 facing the first side S11 and the second side S12, thereby increasing the injection and/or accommodation amount of the electrolyte solution.

The first wound part 111 and the second wound part 112 may be wound in the same (e.g., clockwise) direction, and may help form or provide the electrolyte solution accommodating space ES in or with a symmetrical structure at both sides of the pair of flat sides 21 and 22 in the case 20. The symmetrical electrolyte solution accommodating space ES may make the injection amount of the electrolyte solution impregnated on the electrode assembly 10 uniform.

Below, numerous exemplary variations and embodiments of the present disclosure are described. Compared to the first embodiment, repeated descriptions of the same configuration may be omitted, and descriptions of different configurations may be provided.

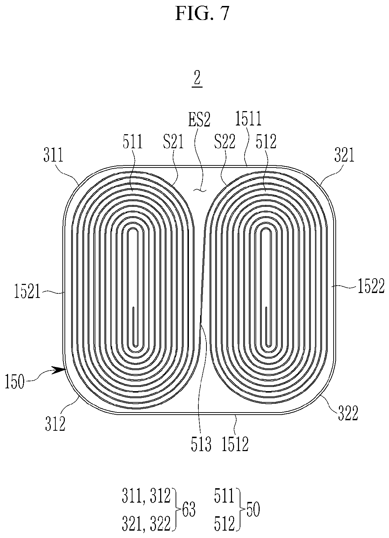

FIG. 7 is a cross-sectional view of a state in which an electrode assembly is in a case in a rechargeable battery according to a second embodiment of the present disclosure. Referring to FIG. 7, in the electrode assembly 50 of the rechargeable battery 2 of the second embodiment, a first wound part 511 and a second wound part 512 may be formed as track-shaped pillars. When viewed from a plan view, the track-shaped pillar means a three-dimensional shape with rounded edges, e.g. in which a half circle is formed on both left and right sides, and the rounded edges or the half circles on both sides are connected with a straight line to have an oval shape, and has a quadrangle shape when viewed from the front.

The curved sides 63 of the case 60 may include a 1-1 quarter circle side 311 and a 1-2 quarter circle side 312 that accommodate or face two sides of the first wound part 511, respectively, and a 2-1 quarter circle side 321 and a 2-2 quarter circle side 322 that accommodate or face two sides of the second wound part 512, respectively.

The quarter circle side refers to a three-dimensional structure in which four corners of a quadrangle are formed as curved or rounded lines when viewed from a flat surface, and has a quadrangle shape when viewed from the front. The quarter circle forming the curved line means one piece when the circle is divided into four equal parts by orthogonal diameters. The length of the arc in one piece is equivalent to one quarter of the circumference. In other words, the case 60 may have a prismatic shape, with the base having rounded corners, e.g. in the shape of a quarter circle. The sides may also be formed based not on a circle, but on an oval or an ellipse. The sides may then be quarter ellipse sides or quarter oval sides.

The electrolyte solution accommodating space ES2 may be set by or between the first side S21 of the first wound part 511 and the second side S22 of the second wound part 512, which are formed by the track-shaped pillars, and the space between the flat sides 1511 and 1512 facing the first side S21 and the second side S22, thereby increasing the injection or accommodation amount of the electrolyte solution.

The case 150 may include a 1-1 flat side 1511 and a 1-2 flat side 1512 and a 2-1 flat side 1521 and a 2-2 flat side 1522. The first wound part 511 and the second wound part 512 may be wound in the same (e.g., clockwise) direction, and may form or provide the electrolyte solution accommodating space ES2 in or with a symmetrical structure on the 1-1 flat side 1511 and 1-2 flat side 1512 sides. The symmetrical electrolyte solution accommodating space ES2 may help make the amount of the electrolyte solution impregnated on the electrode assembly 50 uniform.

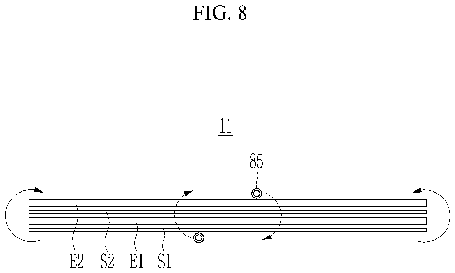

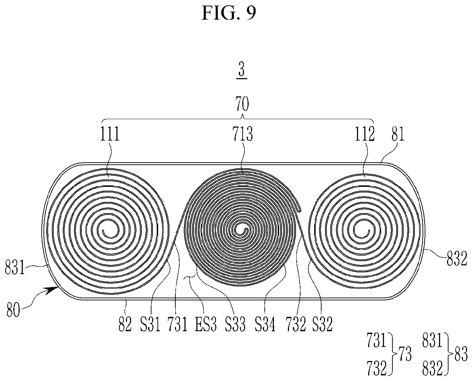

FIG. 8 is a side view showing a winding direction on a stacked body forming an electrode assembly of a rechargeable battery according to a third embodiment of the present disclosure. FIG. 9 is a cross-sectional view of a state in which an electrode assembly of FIG. 8 is in a case. Referring to FIG. 8 and FIG. 9, an electrode assembly 70 of the rechargeable battery 3 of the third embodiment may further include a third wound part 713 (e.g., a circular cylinder) between a first wound part 111 and a second wound part 112.

The connection part 73 may include a 1-3 connection part 731, which connects the first wound part 111 and the third wound part 713, and a 3-2 connection part 732, which connects the third wound part 713 and the second wound part 112. The third wound part 713 may be wound with a pair of mandrel axes 85 on the upper and lower surfaces of the middle position of the stacked body 11.

The curved sides 83 of the case 80 may include a first rounded side 831 that accommodates or faces the (e.g., rounded) side of the first wound part 111 and a second rounded side 832 that accommodates or faces the (e.g., rounded) side of the second wound part 112.

The rounded side refers to a three-dimensional structure that has an oval shape in which both opposing sides are formed of the curved lines when viewed from a flat surface and both half circles are connected with a straight line, and has a quadrangle shape when viewed from the front. The rounded side that forms the curved line refers to one piece when a circle, oval, or ellipse is divided into two parts by its diameter or major axis. In an implementation, the length of the arc in one piece may be equivalent to 1/2 of the circumference.

The electrolyte solution accommodating space ES3 may be set by or between the first side S31 of the first wound part 111 and the third side S33 of the third wound part 713, the fourth side S34 of the third wound part 713, the second side S32 of the second wound part 112, and the flat sides 81 and 82 facing the first side S31 and the third side S33 and facing the fourth side S34 and the second side S32, thereby increasing the injection amount of the electrolyte solution.

The first wound part 111 and the second wound part 112 may be wound in the opposite direction, e.g. clockwise and counter-clockwise, and the third wound part 713 may wind the stacked body 11 in two layers and may be wound in the same direction as the first wound part 111. The third wound part 713 may wind the stacked body 11 in two layers by one turn, so the number of turns may be less than that of the first wound part 111 and the second wound part 112.

The first wound part 111, the second wound part 112, and the third wound part 713 of the third embodiment may form a relatively larger number of the electrolyte solution accommodating spaces ES3 in the case 80, so the injection amount of the electrolyte solution may be further increased.

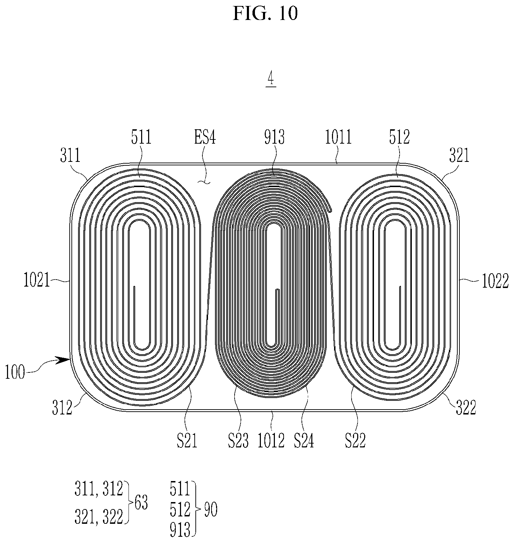

FIG. 10 is a cross-sectional view of a state in which an electrode assembly is in a case in a rechargeable battery according to a fourth embodiment of the present disclosure. Referring to FIG. 10, an electrode assembly 90 of a rechargeable battery 4 of the fourth embodiment may further include a third wound part 913 formed as a track-shaped circular cylinder between the first wound part 511 and the second wound part 512.

The curved sides 63 of the case 100 may include a 1-1 quarter circle side 311 and a 1-2 quarter circle side 312 that respectively accommodate or face two sides of the first wound part 511, and a 2-1 quarter circle side 321 and a 2-2 quarter circle side 322 that respectively accommodate or face two sides of the second wound part 512.

The electrolyte solution accommodating space ES4 may be set by or between the first side S21 of the first wound part 511 and the third side S23 of the third wound part 913, the fourth side S24 of the third wound part 913 and the second side S22 of the second wound part 512, which may be formed by track-shaped columns, and the space between the flat sides 1011 and 1012 facing the first side S21 and the third side S23 and facing the fourth side S24 and the second side S22, thereby increasing the injection amount of the electrolyte solution.

The case 100 may include the 1-1 flat side 1011 and the 1-2 flat side 1012, and a 2-1 flat side 1021 and 2-2 flat side 1022. The first wound part 511 and the second wound part 512 may be wound in the opposite (e.g., clockwise and counter-clockwise) direction, and may form the electrolyte solution accommodating space ES4 in a symmetrical structure on the 1-1 flat side 1011 and 1-2 flat side 1012 sides. The symmetrical electrolyte solution accommodating space ES4 may make the amount of the injected electrolyte solution impregnated on the electrode assembly 90 uniform.

The first wound part 511 and the second wound part 512 may be wound in the same direction, and the third wound part 913 may wind the stacked body 11 in two layers and may be wound in the same direction as the first wound part 511. The third wound part 913 may wind the stacked body 11 in two layers by one turn, so the number of turns may be less than that of the first wound part 511 and the second wound part 512.

The first wound part 511, the second wound part 512, and the third wound part 913 of the fourth embodiment may form a relatively larger number of electrolyte solution accommodating spaces ES4 within the case 150, so the injection amount of the electrolyte solution may be further increased.

By way of summation and review, cylindrical rechargeable batteries may generate excess space due to their circular structure, and due to the internal structure of the case, more than 97% of the space may be occupied by the electrode assembly, making it difficult to secure or accommodate enough electrolyte solution.

One or more embodiments may provide a rechargeable battery that increases an injection amount of an electrolyte solution.

One or more embodiments may provide a rechargeable battery that increases an injection amount of an electrolyte solution while reducing the entire space of the case that accommodates the electrode assembly.

In the cylindrical rechargeable battery according to an embodiment, the structure of the case may include the curved surface on both sides to accommodate the electrode assembly with a plurality of wound parts, and the middle part may be connected to the flat surface to accommodate the electrode assembly, so the electrolyte solution accommodating space may be between the plurality of wound parts and the flat surface.

In this way, the electrolyte solution accommodating space may increase the space that substantially accommodates the electrolyte solution while reducing the entire space inside the case, thereby increasing the injection amount of the electrolyte solution. This frees up capacity in the rechargeable battery.

Example embodiments have been disclosed herein, and although specific terms are employed, they are used and are to be interpreted in a generic and descriptive sense only and not for purposes of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the scope of the present invention as set forth in the claims.

### <Description of symbols>

| | | | |
|---|---|---|---|
| 1, 2, 3, 4: | rechargeable battery | 10, 50: | electrode assembly |
| 11: | stacked body | 14: | vent plate |
| 15: | electrolyte injection opening | 16: | cover |

| | | | |
|---|---|---|---|
| 17: | nut | 20, 60: | case |
| 21, 22: | flat side | 23: | curved side |
| 30: | cap plate | 40: | electrode terminal |
| 63: | curved surface | 70: | electrode assembly |
| 73: | connection part | 80: | case |
| 81, 82: | flat side | 83: | curved side |
| 85: | mandrel axis | 90: | electrode assembly |
| 100: | case | 111: | first wound part |
| 112: | second wound part | 113: | connection part |
| 150: | case | 163: | curved side |
| 231: | first rounded side | 232: | second rounded side |
| 311: | 1-1 quarter circle side | 312: | 1-2 quarter circle side |
| 321: | 2-1 quarter circle side | 322: | 2-2 quarter circle side |
| 511: | first wound part | 512: | second wound part |
| 713: | third wound part | 731: | 1-3 connection part |
| 732: | 3-2 connection part | 831: | first rounded side |
| 832: | second rounded side | 913: | third wound part |
| 1011, 1511: | 1-1 flat side | 1012, 1512: | 1-2 flat side |
| 1021, 1521: | 2-1 flat side | 1022, 1522: | 2-2 flat side |
| E1: | first electrode plate | E1a, E2a: | coated region |
| E1b, E2b: | uncoated region | E2: | second electrode plate |
| ES, ES2: | electrolyte solution accommodating space | | |
| ES3, ES4: | electrolyte solution accommodating space | | |
| H: | terminal hole | S1: | first separator |

| | | | |
|---|---|---|---|
| S2: | second separator | S11: | first side |
| S12, S22: | second side | S21, S31: | first side |
| S23, S33: | third side | S24, S34: | fourth side |

## Claims

1. A rechargeable battery (1, 2, 3, 4), comprising:
an electrode assembly (10, 50, 70, 90) including a first wound part (111, 511) and a second wound (112, 512) part connected by a connection part (113, 513), the electrode assembly (10, 50, 70, 90) being wound at each of both ends of a stacked body of a first electrode plate (E1), a first separator (S1), a second electrode plate (E2), and a second separator (S2); and
a case (80, 100, 150) that accommodates the electrode assembly (10, 50, 70, 90),
wherein:
the case (80, 100, 150) includes:
flat sides (21, 22) facing each other at both sides of the case (80, 100, 150) in a width direction, and
curved sides (23) at both ends of the case in a length direction, and
the flat sides (21, 22) and the first wound part (111, 511) and the second wound part (112, 512) surround an electrolyte solution accommodating space (ES) therebetween.

2. The rechargeable battery (1, 2, 3, 4) of claim 1, wherein the connection part (113, 513) is a part of the stacked body of the first electrode plate (E1), the first separator (S1), the second electrode plate (E2), and the second separator (S2).

3. The rechargeable battery (1, 2, 3, 4) of claim 1 or claim 2, wherein:
the first wound part (111, 511) and the second wound part (112, 512) have a circular cylinder shape, and
the curved sides (23) of the case (80, 100, 150) include a first rounded side (231) that faces a side of the first wound part (111, 511) and a second rounded side (232) that faces a side of the second wound part (112, 512).

4. The rechargeable battery (1, 3) of one of the aforementioned claims, wherein the electrolyte solution accommodating space (ES) is surrounded by:
a first side of the first wound part (111, 511) and a second side of the second (112, 512) wound part, each of the first wound part (111, 511) and the second wound part (112, 512) having a circular cylinder shape, and
the flat sides (21, 22) facing the first side of the first wound part (111, 511) and the second side of the second wound part (112, 512).

5. The rechargeable battery (1, 2, 3, 4) of one of the aforementioned claims, wherein:
the first wound part (111, 511) and the second wound part (112, 512) are wound in the same direction, and
the electrolyte solution accommodating space (ES) has a symmetrical structure between the flat sides (21, 22) of the case (80, 100, 150).

6. The rechargeable battery (2, 4) of one of claims 1, 2, or 5, wherein:
the first wound part (511) and the second wound part (512) have a track-shaped pillar shape, and
the curved sides of the case (150) include:
a 1-1 quarter circle side (311) and a 1-2 quarter circle side (312) that face two sides of the first wound part (511), and
a 2-1 quarter circle side (321) and a 2-2 quarter circle side (322) that face two sides of the second wound part (512).

7. The rechargeable battery (2, 4) of one of claims 1, 2, 5, or 6, wherein the electrolyte solution accommodating space (ES) is surrounded by:
a first side of the first wound part (511) and a second side of the second wound part (512), each of the first wound part (511) and the second wound part (512) having a track-shaped column shape, and
the flat sides (1521, 1522) facing the first side of the first wound part (511) and the second side of the second wound part (512).

8. The rechargeable battery (1, 2) of one of the aforementioned claims, wherein:
the case (150) includes a 1-1 flat side (1511), a 1-2 flat side (1512), a 2-1 flat side (1521), and a 2-2 flat side (1522),
the first wound part (511) and the second wound part (512) are wound in the same direction, and
the electrolyte solution accommodating space (ES) has a symmetrical structure between the 1-1 flat side (1511) and the 1-2 flat side (1512).

9. The rechargeable battery (1, 3) of one of claims 1 through 4, wherein:
the electrode assembly (70) further includes a third wound (713) part between the first wound part (111) and the second wound part (112), the third wound (713) part having a circular cylinder shape,
the connection part (73) includes:
a 3-1 connection part (731) connecting the first wound part (111) and the third wound part (713), and
a 3-2 connection part (732) connecting the third wound part (713) and the second wound part (112), and
the curved sides of the case (80) include a first rounded side (831) that faces a side of the first wound part (111) and a second rounded (832) side that faces the side of the second wound part (112).

10. The rechargeable battery (1, 3) of claim 9, wherein the electrolyte solution accommodating space (ES) is surrounded by:
a first side of the first wound part (111), a third side of the third wound part (713), a fourth side of the third wound part (713), and a second side of the second wound part (112), each of the first wound part (111), the second wound part (112), and the third wound part (713) having a circular cylinder shape, and
the flat sides (81, 82) facing the first side of the first wound part (111), the third side of the third wound part (713), the fourth side of the third wound part (713), and the second side of the second wound part (112).

11. The rechargeable battery (1, 3) of claim 10, wherein:
the first wound part (111) and the second wound part (112) are wound in the opposite direction, and
the third wound part (713) winds the stacked body in two layers and is wound in the same direction as the first wound part (111).

12. The rechargeable battery (2, 4) of one of claims 1, 6, 7, or 8, wherein:
the electrode assembly (90) further includes a third wound part (913) between the first wound part (511) and the second wound part (512),
the first wound part (511), the third wound part (913), and the second wound part (512) each have a track-shaped column shape, and
the curved sides of the case include:
a 1-1 quarter circle side (311) and a 1-2 quarter circle side (312), which respectively face two sides of the first wound part (511), and
a 2-1 quarter circle side (321) and a 2-2 quarter circle side (322), which respectively face two sides of the second wound part (512).

13. The rechargeable battery (2, 4) of claim 12, wherein the electrolyte solution accommodating space (ES) is surrounded by:
a first side of the first wound part (511), a third side of the third wound part (913), a fourth side of the third wound part (913), and a second side of the second wound part (512), each of the first wound part (511), the second wound part (512), and the third wound part (913) having a track-shaped column shape, and
the flat sides facing the first side of the first wound part (511), the third side of the third wound part (913), the fourth side of the third wound part (913), and the second side of the second wound part (512).

14. The rechargeable battery (2, 4) of claim 12 or claim 13, wherein:
the case includes a 1-1 flat side (1011), a 1-2 flat side (1012), a of 2-1 flat side (1021), and a 2-2 flat side (1022),
the first wound part (511) and the second wound (512) part are wound in the opposite direction, and
the third wound part (913) winds the stacked body in two layers and is wound in the same direction as the first wound part (511).

15. The rechargeable battery (1, 2, 3, 4) of one of the aforementioned claims, further comprising:
a cap plate (30) that closes and seals an opening of the case (80, 100, 150), and
an electrode terminal (40) connected to a second uncoated region of the second electrode plate (E2) and installed in an insulating structure on the cap plate (30), and
wherein the case (80, 100, 150) is connected to a first uncoated region of the first electrode plate (E1).
